# EUROPEAN PATENT APPLICATION

(11) **EP 4 435 951 A1**
(43) Date of publication of application: **25.09.2024**
(21) Application number: 23860732.9
(22) Date of filing: 14.08.2023
(51) Int. Cl.: H01M 50/24, H01M 50/383, H01M 50/211, B32B 18/00, B32B 19/02, B32B 19/04

(54) **BATTERY PACK HAVING IMPROVED SAFETY**

(30) Priority: 29.08.2022 KR 20220108524
(71) Applicant: LG Energy Solution, Ltd., Seoul 07335 (KR)
(72) Inventor: JEON, Jong Pil, Daejeon 34122 (KR); LEE, Hyoung Suk, Daejeon 34122 (KR); KIM, Min Bum, Daejeon 34122 (KR); SHIN, Ju Hwan, Daejeon 34122 (KR)
(74) Representative: Plasseraud IP
(86) International application number: PCT/KR2023/012046
(87) International publication number: WO 2024/049054

(57) **Abstract**

Disclosed herein relates to a battery pack, wherein the battery pack has an advantage that in the event of thermal runaway in any of a plurality of cell stack assemblies accommodated therein, the propagation of the generated heat or flame to adjacent assemblies can be minimized, thereby improving the safety of the battery pack against ignition or explosion.

## Description

### [Technical Field]

The present invention relates to a battery pack with improved safety.

This application claims the benefit of priority to Korean Patent Application No. 10-2022-0108524, filed on August 29, 2022, the disclosure of which is incorporated herein by reference in its entirety.

### [Background Technology of the Invention]

Currently, commercialized secondary batteries include nickel-cadmium batteries, nickel-hydrogen batteries, nickel-zinc batteries, and lithium secondary batteries. Among them, lithium secondary batteries are gaining attention for their advantages of free charge and discharge, very low self-discharge rate, and high energy density with almost no memory effect compared to nickel-based secondary batteries.

These lithium secondary batteries primarily utilize lithium-based oxides and carbon materials as positive electrode and negative electrode active materials, respectively. A lithium secondary battery is composed of an electrode assembly in which a positive electrode plate and a negative electrode plate with a positive electrode active material and a negative electrode active material applied, respectively, are arranged with a separator in between, and an exterior material, that is, a battery case that seals and stores an electrode assembly together with an electrolyte.

In general, based on the shape of the exterior material, lithium secondary batteries can be classified into a can-type secondary battery, where the electrode assembly is embedded in a metal can, and a pouch-type secondary battery, where the electrode assembly is embedded in a pouch of aluminum laminated sheet.

In recent years, secondary batteries have been widely used not only in small devices such as portable electronics, but also in medium and large devices such as automobiles and energy storage systems (ESS) for power and energy storage. Secondary batteries are installed in battery packs and mounted on medium and large devices, and the like. Here, in order to increase the capacity and output of the battery pack, a large number of secondary batteries are included in the battery pack and electrically connected to each other. Here, a plurality of secondary batteries may be housed inside one module case to constitute one battery module, and a plurality of battery modules may be housed inside one pack case to constitute one battery pack.

Generally, secondary batteries can degrade when used in environments with higher-than-optimal temperatures, and in severe cases, may explode or ignite. Furthermore, when a plurality of secondary batteries is used to form a battery pack, the heat from the plurality of secondary batteries in a small space can be summed up, causing the temperature of the battery pack to rise more rapidly and severely. In particular, battery packs for vehicles or power storage devices, which are often used outdoors, are frequently exposed to direct sunlight and may be subjected to severe high temperature conditions, such as in summer or in desert areas.

In addition, the battery pack comprises a plurality of battery modules or a plurality of secondary batteries. If an abnormal situation occurs in some of the plurality of battery modules or plurality of secondary batteries comprising the battery pack, heat generation may occur. Once generated, the temperature of the battery may continue to rise, exceeding a predetermined threshold temperature and progressing to a thermal runaway condition. If this thermal runaway occurs inside a battery module or battery pack with a plurality battery cells stacked together, it can induce an explosion or ignition of the battery cells. In this case, flames can propagate to other normally operating battery cells, resulting in a chain reaction of explosion in a plurality of battery cells, which can cause damage to the device mounted with the battery module/pack and expose the user to a safety hazard.

### [Prior Art Documents]

(Patent Document 001) Korean Patent Publication No. 10-2022-0029941

### [Description of the Invention]

### [Technical Problem]

Accordingly, it is an object of the present invention to provide a battery pack with improved safety due to the delayed propagation of heat and/or flame between cells during thermal runaway situations.

### [Technical Solution]

To address the problems described above,
In an exemplary embodiment, the present invention provides,
a battery pack accommodating at least one cell stack assembly, including:
a pack case containing a base plate including a cell stack region in which the at least one cell stack assembly is located; and a side pack frame coupled by extending vertically along an edge of the base plate to enclose the cell stack region, and
a pack case cover positioned at an upper part of the at least one cell stack assembly located in the cell stack region and coupled to an upper end part of the pack case,
wherein the at least one cell stack assembly comprises an isolation member including a heat-resistant plastic matrix on an outer side thereof, and
wherein the isolation member does not melt and form droplets upon contact with a flame of 800 to 1000°C for at least five minutes.

Here, the isolation member may include a monolayer sheet having a fiber dispersed in the heat-resistant plastic matrix.

As the heat-resistant plastic matrix, one or more resins may be included: acrylonitrile-based resin, acrylic-based resin, benzimidazole-based resin, indoline-based resin, imide-based resin, amide-based resin, phenylene oxide-based resin, butylene terephthalate-based resin, and copolymers thereof.

In addition, the fiber may include one or more of the following: glass fiber, carbon fiber, and aramid fiber, and the fiber may be included in an amount of 5 to 40wt% relative to a total weight of an isolation member.

Moreover, the isolation member provided on an upper surface of the cell stack assembly may include a plurality of exhaust ports.

In addition, the flame-propagation prevention sheet may be provided between the pack case cover and the isolation member.

Here, the flame-propagation prevention sheet may be a silicate sheet composed of silicates containing one or more of the following elements: silicon (Si), aluminum (Al), iron (Fe), magnesium (Mg), manganese (Mn), titanium (Ti), sodium (Na), potassium (K) fluorine (F), and oxygen (O).

As an example, the flame-propagation prevention sheet may include at least one selected from the group consisting of the following minerals: dolomite, penzite, seladonite, paragonite, margarite, wolframite, graphite, anatase, mica, siderophile, clintonite, lithium dolomite, trilithionite, polytaconite, zinwaldite, and taniolite.

In addition, the isolation member may include a plurality of exhaust ports arranged perpendicular to a cell stacking direction of the cell stack assembly accommodated inside the pack case, and the flame-propagation prevention sheet may have a partially incised exhaust region along an exhaust port of the isolation member.

Moreover, the flame-propagation prevention sheet may have an average thickness of 0.5 to 5.0 mm in order to act on the pressure generated by the internally generated gas and/or flame.

### [Advantageous Effects]

A battery pack according to the present invention has the advantage that in the event of a thermal runaway in any of the plurality of cell stack assemblies accommodated therein, the propagation of the generated heat or flame to adjacent assemblies can be minimized, thereby improving the safety of the battery pack against ignition or explosion.

### [Brief Description of the Drawings]

FIG. 1 is a perspective view illustrating the structure of a battery pack according to the present invention.
FIG. 2 is a plan view illustrating an isolation member disposed on an upper surface of a cell stack assembly in accordance with the present invention.
FIG. 3 is a plan view illustrating a flame-propagation prevention sheet on an isolation member disposed on an upper surface of a cell stack assembly in accordance with the present invention.
FIG. 4 is a cross-sectional view schematically illustrating the manner in which heat and/or flame generated internally during thermal runaway of a cell stack assembly accommodated in a battery pack according to the present invention is discharged.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Hereinafter, the present invention will be described in more detail.

### Battery pack

In an exemplary embodiment, the present invention provides,
a battery pack accommodating a plurality of cell stack assemblies, including:
a pack case containing a base plate including a cell stack region wherein a cell stack assembly is located; and a side pack frame coupled by extending vertically along an edge of a base plate to enclose the cell stack region, and
a pack case cover positioned at an upper part of a cell stack assembly located in the cell stack region and coupled to an upper end part of a pack case,
wherein the side pack frame and the pack case cover includes an isolation member including a heat-resistant plastic matrix on an outer side, and
the isolation member does not form droplets upon contact with a flame of 800 to 1000°C for at least five minutes.

The battery pack according to the present invention includes a plurality of cell stack assemblies, a pack case accommodating them, and a pack case cover. Here, the side pack frames and the pack case cover included in the pack case have an inner side having an isolation member that does not form droplets even at a high temperature of 500°C or more. Accordingly, the battery pack can inhibit the propagation of heat and/or flame from any one of the plurality of cell stack assemblies to neighboring cell stack assemblies in the event of heat generation or thermal runaway, thereby inhibiting ignition and/or explosion of the battery pack.

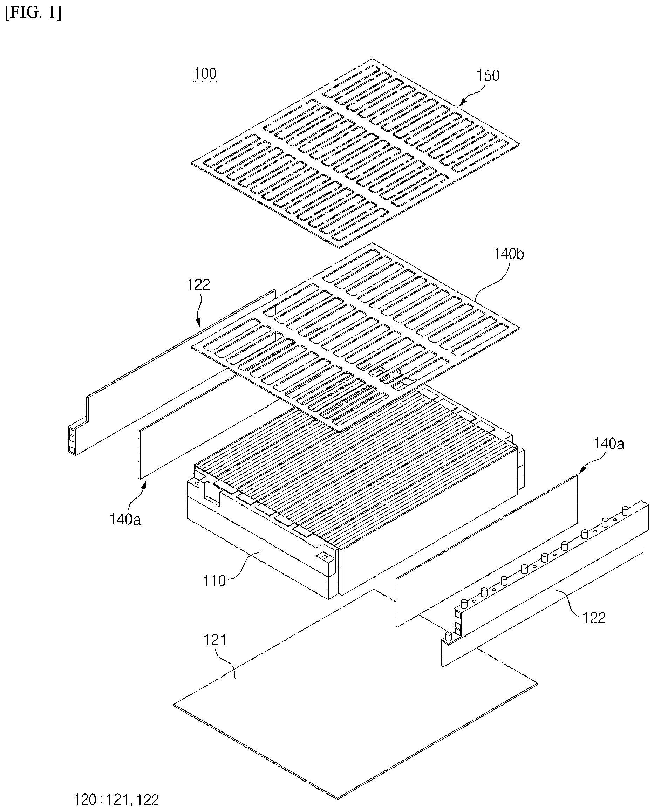

FIGS. 1 to FIGS. 4 are perspective, plan, and cross-sectional views illustrating the structure of the battery pack 100 according to the present invention. Hereinafter, the present invention will be described in more detail with reference to FIGS. 1 to FIGS. 4.

A battery pack 100 of the present invention includes a cell stack assembly 110, a pack case 120 in which the cell stack assembly 110 is accommodated, and a pack case cover 130 (not shown).

The cell stack assembly 110 referred to herein may exclude a module frame configuration that encloses and protects a cell stack of a plurality of battery cells stacked together, and may include a configuration that incorporates a busbar frame and end plates on the front and back surfaces, respectively, where electrode leads are formed in the cell stack.

Here, the cell stack has a stacked structure of a plurality of battery cells, the battery cells include an electrode assembly therein, a pair of electrode leads electrically connected to the electrode assembly, and a cell case enclosing the electrode assembly such that the electrode leads are drawn outwardly. The electrode leads may be derived on each side of the cell case.

In addition, the busbar frame includes a busbar electrically connected to the battery cells. The busbar frame is tightly coupled to the cell stack at the front and rear of the cell stack such that electrode leads of each battery cell included in the cell stack are connected to the busbar.

Furthermore, the end plate is coupled with the busbar frame to cover the busbar to protect the busbar and electrode leads and the like from external impact. In addition, the end plate gathers and fixes each battery cell included in the cell stack.

The cell stack assembly has the advantage of allowing for more efficient dissipation of heat generated by the plurality of battery cells during charge and discharge, as well as reducing the unit weight of the cell stack by not including a module frame configuration that encloses and protects the cell stack as described above, but instead having end plates that structurally fix the stacked battery cells and a busbar frame that electrically connects the fixed battery cells.

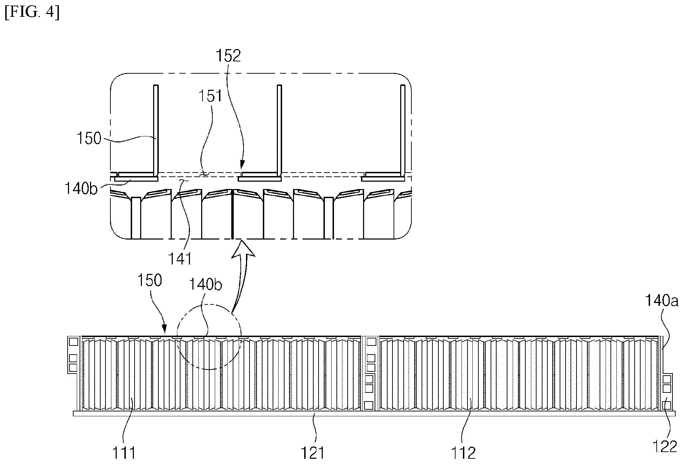

In addition, the cell stack assemblies 110 may be plurally provided in the battery pack. The plurality of cell stack assemblies 110 may be arranged in a left-to-right direction with their sides facing each other. For example, the battery pack 100 may include at least two cell stack assemblies 110 (for example, 111 and 112 in FIG. 4). In this case, the two cell stack assemblies 110 may be arranged in a left-to-right direction with a right side and a left side facing each other.

In addition, the battery pack 100 includes a pack case 120 including the cell stack assembly 110 described above, and a pack case cover 130 (not shown) coupled to the pack case to cover an upper part of the cell stack assembly 110 at an upper part of the pack case.

Here, the pack case 120 includes a base plate 121 disposed at a lower part of the cell stack assembly 110 to include a cell stack region in which the cell stack assembly 110 is located. The base plate 121 may have a plate shape extending in a horizontal direction. As used herein, the horizontal direction refers to the direction of a plane of a flat ground. The base plate 121 may be provided with a metal material having good mechanical rigidity.

In addition, a plurality of cell stack assemblies 110 may be located on the upper part of the base plate 121. To this end, the base plate 121 may include a cell stack region in which the cell stack assemblies 110 are located, and side pack frames 122 extending vertically along an edge of the base plate 121 to enclose the cell stack region may be coupled together to form a space for accommodating the cell stack assemblies 110.

In addition to performing the function of providing a space for the cell stack assembly 110 to be accommodated at the lower part, the base plate 121 may also perform the function of a heat sink for dissipating heat generated by the cell stack assembly 110 to the outside. To this end, the base plate 121 may be provided with cooling means (not shown) arranged for a cooling medium such as coolant or air to flow in contact with the opposite side of the side on which the cell stack assembly 110 is accommodated in order to remove heat generated from the cell stack assembly 110. In addition, the coupling of the side pack frames 122 may be performed in a manner conventional in the art, for example by friction stir welding or the like.

Furthermore, the battery pack 100 includes an isolation member 140 on the outer side of the cell stack assembly 110 accommodated therein, that is, on the outer side of the cell stack assembly 110. Specifically, the battery pack 100 may include isolation members 140a, 140b on the inner side of the side pack frame 122 and the pack case cover 130, that is, between the side pack frame 122 and the cell stack assembly 110 and between the pack case cover 130 and the cell stack assembly 110, respectively, excluding the base plate 121 that performs a heat sink function as shown in FIG. 1.

In the event of a thermal runaway occurring in any of the plurality of cell stack assemblies accommodated therein, the isolation member 140 may cause less damage by the generated heat or flame, as well as minimize the propagation of the generated heat or flame from that cell stack assembly to adjacent cell stack assemblies by including a heat-resistant plastic matrix.

To this end, the isolation member 140 includes a heat-resistant plastic matrix that has minimal or no shape deformation at elevated temperatures. Here, "minimal or no shape deformation at high temperatures" may mean that there is no shape change due to melting and/or carbonization at temperatures above 500°C. More specifically, it may mean that there is no change in shape due to melting and/or carbonization of the material when left for a period of time or in contact with heat at a temperature of 600°C or more, 700°C or more, or 600°C to 1000°C. As one example, the isolation member may not form droplets due to melting of the heat-resistant plastic matrix or holes due to carbonization when contacted with a flame at 800 to 1000°C for at least 5 minutes, more specifically, no droplets or holes due to carbonization may be formed when contacted for 5 minutes to 15 minutes; or 8 minutes to 12 minutes.

Such a heat-resistant plastic matrix may be applied without being particularly limited as long as it is free of shape change due to melting and/or carbonization at temperatures above 500°C as described above, but those that are free of shape change due to melting and/or carbonization at temperatures of 800 to 1,000°C considering the internally induced ignition and/or explosion temperatures during thermal runaway of the cell stack assembly 110 may be preferably applied. For example, the heat-resistant plastic matrix may include one or more compounds selected from acrylonitrile-based resins, acrylic-based resins, benzimidazole-based resins, indoline-based resins, imide-based resins, amide-based resins, phenylene oxide-based resins, butylene terephthalate-based resins, and copolymers thereof. Here, the compound refers to a compound formed using a monomer such as acrylonitrile, acrylate, or the like, or containing benzimidazole, indoline, imide, amide, phenylene oxide, butylene terephthalate, or the like in a repeating unit.

In one example, the heat-resistant plastic matrix may have phenylene oxide-based resin, such as polyphenylene oxide (PPO), or an amide-based resin, such as nylon, applied alone or in combination. Here, the phenylene oxide-based resin and amide-based resin may be applied in homopolymer form or in a form in which some repeating units are modified.

Additionally, the isolation members 140a, 140b may have a sheet form with a monolayer structure of fiber structures dispersed in a heat resistant plastic matrix to impart rigidity along with heat resistance of the member. Conventional battery packs have a multilayer structured member comprising a metal oxide, such as silicon oxide (SiO₂), to implement heat resistance and rigidity to the module and/or cell stack assembly accommodated on the inside of the pack case. In this case, in order to implement the multilayer structure of the metal oxide, an adhesive or the like is applied between each layer, which deforms during heat generation or thermal runaway of the module and/or the cell stack assembly, and therefore has limitations in preventing the heat or flame generated inside the battery pack from propagating to the neighboring module and/or cell stack assembly. However, the isolation members 140a, 140b of the present invention have the advantage of being in the form of a single-layer sheet with a fiber structure dispersed in a heat-resistant plastic matrix having high form stability at high temperatures, thereby achieving sufficient heat resistance and rigidity while excluding adhesives and the like required for multi-layer structures.

Here, the fiber structure may include one or more among glass fiber (GF), carbon fiber (CF), and aramid fiber (AF). In one example, the fiber structure may include glass fiber (GF), which can improve the strength and elastic modulus of the heat-resistant plastic matrix and at the same time reinforce the insulating performance of the isolation member. The glass fibers are commercially available, so E-glass, S-glass, and the like may be used, and glass fibers having a length of 3 to 6mm and a diameter of 10 to 15µm may be used.

In addition, the fiber structure may be included in the isolation member at a certain content to improve the heat resistance and mechanical properties of the isolation members 140a, 140b. Specifically, the fiber structure may be included at a content of 5 wt.% to 40 wt.% based on a total weight of the isolation members 140a, 140b, and more specifically, may be included at a content of 5 wt.% to 35 wt.%; 5 wt.% to 30 wt.%; 5 wt.% to 15 wt.%; 8 wt.% to 12 wt.%; 10 wt.% to 20 wt.%; 20 wt.% to 40 wt.%; or 25 wt.% to 35 wt.% based on the total weight of the isolation members 140a, 140b. By controlling the content of the fiber structure to the above ranges, the present invention can prevent a significantly lower content from resulting in insufficient heat resistance and rigidity of the isolation members 140a, 140b, while preventing an excessive amount from resulting in an increased breaking strength of the isolation members 140a, 140b, and preventing resistance to external forces from decreasing when external forces are applied to the battery pack 100.

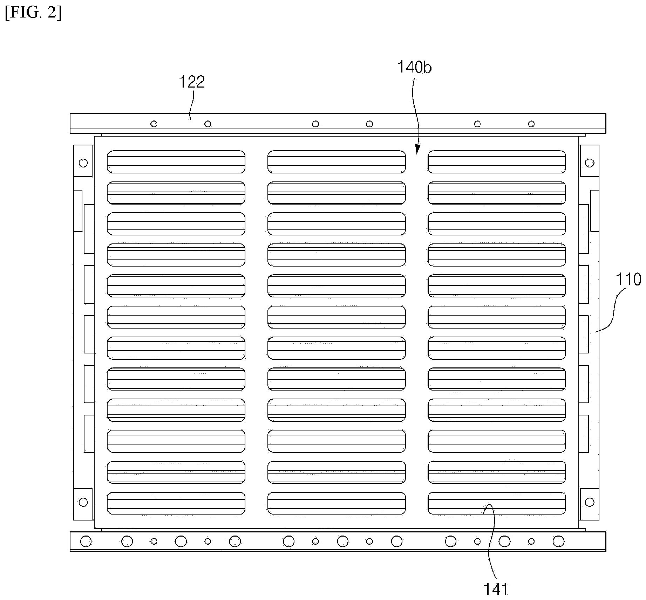

Furthermore, the isolation member 140b provided on the inside of the pack case cover among the isolation members may include a plurality of exhaust ports 141 as shown in FIG. 2, the exhaust ports 141 being positioned to be perpendicular to a cell stacking direction of the cell stack assembly 110 accommodated inside the pack case 120. The exhaust ports 141 may be arranged in the form of through-holes across the front surface of the isolation member 140b, and may provide a pathway for heat, gases, and/or flames generated during abnormal operation of any of the plurality of cell stack assemblies provided inside the battery pack 100 to be discharged to the outside.

Meanwhile, the battery pack 100 may further include a flame-propagation prevention sheet 150 on an upper part of the isolation member 140b disposed on the upper surface of the cell stack assembly 110. In this case, the flame-propagation prevention sheet 150 may be configured of a material having insulating properties without deforming in response to high internal temperatures during abnormal operation of the battery pack 100. Specifically, the flame-propagation prevention sheet 150 may be composed of a silicate material that has high rigidity and insulation, as well as excellent heat resistance and insulation.

The silicate material referred to in the present invention is composed of a silicate, and silicate may be applied without limitation as long as it is one conventionally used in the art, but more particularly, one containing one or more elements selected from silicon (Si), aluminum (Al), iron (Fe), magnesium (Mg), manganese (Mn), titanium (Ti), sodium (Na), potassium (K) fluorine (F), and oxygen (O) may be used.

In general, silicates are neutral salts in which the hydrogen of silicic acid is substituted with atoms of other metals, but in the present invention, elements such as aluminum (Al), iron (Fe), magnesium (Mg), manganese (Mn), titanium (Ti), sodium (Na), and potassium (K) can be substituted for the hydrogen in order to achieve a flame retardant and/or flame resistant effect, and layered silicates can be used, especially for flame retardancy.

For example, the silicate may include one or more of the following: dolomite, penzite, seladonite, paragonite, margarite, wollastonite, biotite, anatase, goethite, siderophyllite, clinoptilolite, clintonite, lithium dolomite, trilithionite, polytitanite, zinwaldite, and taniolite.

In one example, the flame-propagation prevention sheet 150 may include a mica sheet including mica. Mica is one of the crude rock materials comprising granite, and has excellent electrical insulating properties, and is characterized by very little change in properties when heated. The mica has good shape stability and insulation resistance even at high temperatures of 500~1000°C. In addition, mica has excellent flame resistance and does not produce smoke when burned or heated.

In addition, in order to manufacture silicate, e.g., mica, to a sheet shape, the flame-propagation prevention sheet 150 may manufacture scrap or ground mica, which is the main component, by mixing with a binder (e.g., heat-resistant silicone), molding into a large plate, and then cutting to a suitable length to form a sheet that fits the size of the electrode assembly. However, the manufacturing method of the mica sheet is not limited to this, and the mica sheet can be manufactured in a variety of ways according to techniques known in the art.

In this context, "as a main component" may mean that the subject component is included in at least 60 parts by weight, at least 70 parts by weight, at least 80 parts by weight, at least 85 parts by weight, at least 90 parts by weight, at least 95 parts by weight, at least 98 parts by weight, or at least 99 parts by weight based on the total 100 parts by weight of the substance.

In one example, the flame-propagation prevention sheet 150 may contain 1 to 20 parts by weight of binder with respect to the total 100 parts by weight of silicate.

In addition, the binder included in the sheet can be any one having good adhesion to the silicate. Specifically, the binder may include one or more among, but not limited to, polyolefin including polyethylene (PE), polypropylene (PP), or poly(ethylene-propylene) copolymers; and polyamides including nylon, and heat-resistant silicone.

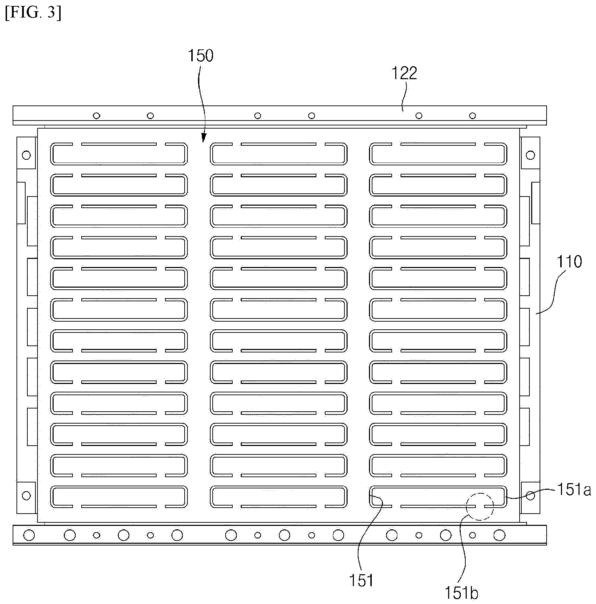

Furthermore, the flame-propagation prevention sheet 150 may include a partially incised exhaust region 151 along the exhaust port 141 of the isolation member 140b disposed in the lower part, as shown in FIG. 3. Specifically, referring to FIG. 4, the flame-propagation prevention sheet 150 may function to ensure that the exhaust region 151 remains closed during normal operation of the battery pack 100, but during abnormal operation of the battery pack 100 in which thermal runaway of the cell stack assembly 110 occurs, may provide a pathway for heat, gas, and/or flame generated from the cell stack assembly 110 to be released to the outside along with the exhaust port 141 of the isolation member without propagating to the corresponding assembly and adjacent assemblies. To this end, the exhaust region 151 may have a partially incised shape 151a, 151b along the exhaust port 141 of the isolation member 140b disposed on the lower part of the flame-propagation prevention sheet 150. Such a shape may induce discharge of heat, gas, and/or flame to the outside in the event of heat, gas, and/or flame generation within the battery pack 100, as the exhaust region 151 is deflected toward the outer surface of the flame-propagation prevention sheet 150 by pressure from the heat, gas, and/or flame.

The battery pack according to the present invention has the advantage that by having the configuration described above, it is possible to inhibit the propagation of heat and/or flame from any of the plurality of cell stack assemblies provided therein to neighboring cell stack assemblies in the event of heat generation or thermal runaway, thereby improving the safety of the battery pack against ignition or explosion.

Hereinafter, the present invention will be described in more detail by way of examples and experimental examples.

However, the following examples and experimental examples are only illustrative of the present invention, and the present invention is not limited to the following examples.

### Examples 1-5 and Comparative Examples 1-3.

A battery pack was prepared in which four cell stack assemblies including ten pouch cells were inserted into a pack case, two horizontally and two vertically. Each cell stack assembly was manufactured to have a structure including isolation members on a side surface and upper surface, as shown in FIG. 1, and a flame-propagation prevention sheet was introduced on an isolation member of the upper surface.

Here, the following adjustments were made to the isolation member: i) the type of heat-resistant plastic matrix, ii) the type of fiber structure, iii) the content of the fiber structure (based on the total weight of the isolation member), and iv) whether a flame-propagation prevention sheet is included.

In addition, the results of the thermal runaway test for the isolation member are shown in Table 1. Here, the thermal runaway test was performed by fixing the isolation member parallel to the ground, and then applying a flame (internal temperature: 850±20°C) vertically to the lower surface for 20 minutes to measure the time it takes for the morphological change (droplet formation or hole formation due to matrix melting) to occur in the area contacted by the flame.

**[Table 1]**

| | Isolation member configuration | | | | |
|---|---|---|---|---|---|
| | Heat-resistant plastic matrix type | Fiber structure Type | Fiber structure content | TR test | Whether flame-propagati on preventio n sheet is included |
| Example 1 | m-PPO | - | - | No change | X |
| Example 2 | m-PPO | GF | 10 wt% | No change | X |
| Example 3 | m-PPO | GF | 10 wt% | No change | O |
| Example 4 | m-PPO | GF | 30 wt% | No change | O |
| Example 5 | PA | GF | 30 wt% | No change | O |
| Comparative Example 1 | - | - | - | - | - |
| Comparative Example 2 | m-PPO | GF | 30 wt% | 60 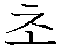 | O |
| Comparative Example 3 | PA | GF | 30 wt% | 22 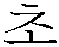 | O |
| TR test: Thermal Runaway Test | | | | | |
| m-PPO: Modified polyphenylene oxide | | | | | |
| PA: Polyamide | | | | | |

### Comparative Example 4.

The battery pack was manufactured in the same way as in Example 1, except that a two-layer sheet including a rigid layer of polyimide mixed with carbon fiber and a mica layer was used as the isolation member.

### Experimental Example.

To evaluate the impact of thermal runaway of a cell stack assembly accommodated in a battery pack according to the present invention on its neighboring assemblies, an internal ignition was generated in one of the cell stack assemblies mounted in each of the battery packs manufactured in the Examples and Comparative Examples by inducing thermal runaway. Then, whether the flame generated in the cell stack assembly where thermal runaway was induced was propagated to the neighboring cell stack assemblies was confirmed, and separately, the time taken for the ignition to occur in the neighboring cell stack assemblies was measured.

Specifically, the battery packs manufactured in the Examples and Comparative Examples were both charged to a SOC of 100%. Then, a heating pad was mounted on the lower part of any one of the four cell stack assemblies accommodated in the pack case, and the heating pad was heated to 800°C at a rate of 10°C/min to induce thermal runaway. In this case, the heating pad was a silicon heater (model name: SBH2012) manufactured by Hakkou Corporation. Once the heating pad started to warm up and ignited in the cell stack assembly mounted with the heating pad, it was checked whether the flame generated internally propagated to the neighboring cell stack assembly. The time taken for the neighboring cell stack assembly to ignite was then measured, and the results are shown in Table 2 below.

**[Table 2]**

| | Whether flame propagated | Ignition time required |
|---|---|---|
| Example 1 | Unpropagated | 7 min 56 secs |
| Example 2 | Unpropagated | 8 min 21 secs |
| Example 3 | Unpropagated | 8 min 23 secs |
| Example 4 | Unpropagated | 8 min 31 secs |
| Example 5 | Unpropagated | 8 min 26 secs |
| Comparative Example 1 | Propagated | 5 min 13 secs |
| Comparative Example 2 | Propagated | 6 min 29 secs |
| Comparative Example 3 | Propagated | 6 min 5 secs |
| Comparative Example 4 | Propagated | 8 min 18 secs |

As shown in Table 2, it can be seen that a battery pack according to the present disclosure provides increased safety in the event of thermal runaway of a cell stack assembly. Specifically, the battery pack of the examples was found to dissipate internally generated flame through the pathway provided by the isolation member (and the flame-propagation prevention sheet) during thermal runaway of the cell stack assembly, thereby preventing flame propagation to the assembly and adjacent assemblies. In addition, the battery pack of the examples was found to have reduced heat propagation from a thermal runaway induced cell stack assembly to an adjacent assembly, thereby delaying the ignition of the adjacent cell stack assembly.

From these results, it can be seen that a battery pack according to the present invention can inhibit the propagation of heat/flame from a cell stack assembly to neighboring cell stack assemblies in the event of high temperature heating or thermal runaway, thereby improving the safety of the battery pack.

While the foregoing has been described with reference to preferred examples of the present invention, it will be understood by those skilled in the art or having ordinary knowledge of the art that various modifications and changes can be made to the invention without departing from the field of thought and technology described in the patent claims that will follow.

Accordingly, the technical scope of the present invention is not limited to what is described in the detailed description of the specification, but must be determined by the claims of the patent.

### [Reference numerals]

| | | | |
|---|---|---|---|
| 100: | BATTERY PACK OF THE PRESENT INVENTION | | |
| 110: | CELL STACK ASSEMBLY | | |
| 120: | PACK CASE | 130: | PACK CASE COVER |
| 121: | BASE PLATE | 122: | SIDE PACK FRAME |
| 140, 140A, 140B: | ISOLATION MEMBERS | | |
| 141: | EXHAUST PORTS | | |
| 150: | FLAME-PROPAGATION PREVENTION SHEET | | |
| 151: | EXHAUST REGION | | |
| 151A: | INCISION LINE | 151B: | NON-INCISION LINE |

## Claims

1. A battery pack accommodating at least one cell stack assembly, comprising:
a pack case containing a base plate including a cell stack region in which the at least one cell stack assembly is located; and a side pack frame coupled by extending vertically along an edge of the base plate to enclose the cell stack region, and
a pack case cover positioned at an upper part of the at least one cell stack assembly located in the cell stack region and coupled to an upper end part of the pack case,
wherein the at least one cell stack assembly comprises an isolation member including a heat-resistant plastic matrix on an outer side thereof, and
wherein the isolation member does not melt and form droplets or holes upon contact with a flame of 800 to 1000°C for at least five minutes.

2. The battery pack of claim 1, wherein the heat-resistant plastic matrix comprises one or more resins selected from the group consisting of acrylonitrile-based resin, acrylic-based resin, benzimidazole-based resin, indoline-based resin, imide-based resin, amide-based resin, phenylene oxide-based resin, butylene terephthalate-based resin, and copolymers thereof.

3. The battery pack of claim 1, wherein the isolation member comprises a monolayer sheet having a fiber dispersed in the heat-resistant plastic matrix.

4. The battery pack of claim 3, wherein the fiber is one or more of glass fiber, carbon fiber, and aramid fiber.

5. The battery pack of claim 3, wherein the fiber is included in an amount of 5 to 40 wt% relative to a total weight of an isolation member.

6. The battery pack of claim 1, wherein the isolation member provided on an upper surface of the cell stack assembly comprises a plurality of exhaust ports.

7. The battery pack of claim 1, further comprising:
a flame-propagation prevention sheet between the pack case cover and the isolation member.

8. The battery pack of claim 7, wherein the flame-propagation prevention sheet is a silicate sheet composed of silicates containing one or more of the following elements: silicon (Si), aluminum (Al), iron (Fe), magnesium (Mg), manganese (Mn), titanium (Ti), sodium (Na), potassium (K) fluorine (F), and oxygen (O).

9. The battery pack of claim 7, wherein the flame-propagation prevention sheet includes at least one selected from the group consisting of dolomite, penzite, seladonite, paragonite, margarite, wollastonite, biotite, anatase, mica, siderophyllite, clintonite, lithium dolomite, trilithionite, polytaconite, zinwaldite, and taniolite.

10. The battery pack of claim 7, wherein the isolation member includes a plurality of exhaust ports arranged perpendicular to a cell stacking direction of the at least one cell stack assembly accommodated inside the pack case, and
wherein the flame-propagation prevention sheet has a partially incised exhaust region along an exhaust port of the isolation member.

11. The battery pack of claim 7, wherein the flame-propagation prevention sheet has an average thickness of 0.5 to 5.0 mm.
